(19) Europäisches Patentamt / European Patent Office / Office européen des brevets

(11) **EP 3 442 182 B1**

(12) **EUROPEAN PATENT SPECIFICATION**

(45) Date of publication and mention
of the grant of the patent:
**01.04.2020 Bulletin 2020/14**

(51) Int Cl.:
**H04L 12/835** *(2013.01)*  **H04L 12/833** *(2013.01)*
**H04L 12/823** *(2013.01)*

(21) Application number: **17185073.8**

(22) Date of filing: **07.08.2017**

(54) **JOINT DROPPING OR MARKING OF DATA PACKETS FOR TRAFFIC CONGESTION CONTROL**

GEMEINSAMES LÖSCHEN ODER MARKIEREN VON DATENPAKETEN ZUR REGELUNG VON VERKEHRSÜBERLASTUNG

CHUTE OU MARQUAGE DE JOINT DE PAQUETS DE DONNÉES DE CONTRÔLE DE CONGESTION DU TRAFIC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2019 Bulletin 2019/07**

(73) Proprietor: **Nokia Solutions and Networks Oy 02610 Espoo (FI)**

(72) Inventors:
• **DE SCHEPPER, Koen**
  **2650 Edegem (BE)**
• **DE VLEESCHAUWER, Danny**
  **9940 Evergem (BE)**
• **TSIAFLAKIS, Paschalis**
  **2223 Schriek (BE)**

(74) Representative: **Nokia EPO representatives Nokia Technologies Oy Karakaari 7 02610 Espoo (FI)**

(56) References cited:
• **WHITE CABLELABS R PAN CISCO SYSTEMS G: "Active Queue Management (AQM) Based on Proportional Integral Controller Enhanced (PIE) for Data-Over-Cable Service Interface Specifications (DOCSIS) Cable Modems; rfc8034.txt", ACTIVE QUEUE MANAGEMENT (AQM) BASED ON PROPORTIONAL INTEGRAL CONTROLLER ENHANCED (PIE) FOR DATA-OVER-CABLE SERVICE INTERFACE SPECIFICATIONS (DOCSIS) CABLE MODEMS; RFC8034.TXT, INTERNET ENGINEERING TASK FORCE, IETF; STANDARD, INTERNET SOCIETY (ISOC) 4, 1 March 2017 (2017-03-01), pages 1-17, XP015117658, [retrieved on 2017-03-01]**
• **LIU KE ET AL: "Joint Upload-Download TCP Acceleration over Mobile Data Networks", 2017 14TH ANNUAL IEEE INTERNATIONAL CONFERENCE ON SENSING, COMMUNICATION, AND NETWORKING (SECON), IEEE, 12 June 2017 (2017-06-12), pages 1-9, XP033113414, DOI: 10.1109/SAHCN.2017.7964931 [retrieved on 2017-06-30]**
• **BAUSO D ET AL: "AQM stability in multiple bottleneck networks", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 4, 20 June 2004 (2004-06-20), pages 2267-2271, XP010712229, DOI: 10.1109/ICC.2004.1312921 ISBN: 978-0-7803-8533-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 442 182 B1

**Description**

**Technical Field of the Invention**

The present invention relates to a method and apparatus for controlling traffic congestion within a data communication network.

**Technical Background of the Invention**

Recent Discrete Multi Tone (DMT) technologies, such as G.fast over twisted pairs or coaxial cables, contain mechanisms that allow to dynamically control the upstream and downstream link rates. These mechanisms are known as Dynamic Resource Allocation (DRA). The aim of DRA is to tune the upstream and downstream link rates (denoted as Cus and $C_{DS}$ respectively) so that they can accommodate the amount of offered traffic in upstream and downstream directions (denoted as $I_{US}$ and $I_{DS}$ respectively).

In G.fast for instance, DRA relies upon independent Dynamic Time Assignment (iDTA) or coordinated Dynamic Time Assignment (cDTA) for dynamically updating the sharing of the Time Division Duplex (TDD) frames between upstream and downstream communications. Practically, the split between upstream and downstream can be adjusted as fast as every 6ms to 100ms.

The document with title "Active Queue Management based on Proportional Integral Controller Enhanced (PIE) for Data-over-Cable Service Interface Specifications (DOCSIS)Cable Modems" discloses high level AQM requirements for DOCSIS MAC. The document with title "Joint Upload -Download TCP Acceleration Over Mobile Data Networks" discloses aggregate transmission control rate with upload and download flows aggregations. The document with title "AQM Stability in Multiple Bottleneck Networks" discloses AQM controllers that base their control action on congestion status of the other nodes.

In the on-going standardization works for next full-duplex enabled DOCSIS standard, DRA is expected to rely on the dynamic scheduling of communication resources to the Cable Modems (CM), such as dynamic allocation of Frequency Division Duplexing (FDD) transmit and receive profiles, or dynamic allocation of frequency slots and/or time slots to the respective CMs for upstream and downstream communications, resulting in dynamic upstream and downstream link rates.

In G.fast, DRA determines the upstream and downstream link rates based on the occupancies of the upstream and downstream traffic queues. The queue occupancy in the residential gateway at the subscriber's side of the copper line is reported back to the Distribution Point Unit (DPU) at the network side of the copper line so that DRA can dynamically set an appropriate split between the upstream and downstream link rates.

In an environment with non-elastic sources, i.e. sources that send at a predetermined (possibly variable) rate such as regular User Datagram Protocol (UDP) sources, solutions are known, which basically adapt the link rates based on the offered loads. However, since nowadays most traffic sources are controlled by Transmission Control Protocol (TCP), or equivalent protocols such as Quick UDP Internet Connection (QUIC), 90% of the amount of traffic on the Internet is elastic. Designing a DRA algorithm in this environment is more involved for the following reasons.

In case of elastic sources, the offered traffic in upstream and downstream directions are determined by TCP running in the end points. There are many TCP versions, but they all follow these rules: 1) TCP senders keep increasing their sending rate until they experience congestion; 2) when TCP senders experience congestion, which can come under the form of dropped or marked packets, they decrease their sending rate (by typically 30% to 50%). It is the bottleneck queue on the end-to-end path that drops or marks packets. Such a queue is fed by an amount of offered traffic $I_{US}$ (or $I_{DS}$) and served by a rate Cus (or $C_{DS}$). Packets may be dropped by the queue overflowing (tail-drop), or may be dropped or marked by an Active Queue Management (AQM) mechanism. An AQM mechanism drops or marks packets more if the queue occupancy or queue delay is or gets larger, and less if it is or gets smaller. Note that, in both cases (tail-drop and AQM), if the offered traffic $I_{US}$ (or $I_{DS}$) remains below the configured link rate $C_{US}$ (or $C_{DS}$) for some period of time, no congestion signals are sent and TCP will therefore tend to grab as much as it can, i.e. $I_{US}$ (or $I_{DS}$) will tend to increase until it reaches (at least) the value $C_{US}$ (or $C_{DS}$). So, the strategy of setting the link rates based on the offered traffic fails for elastic traffic.

Another possibility is to rely on queue observations to tune the link rates. A DRA algorithm that relies on queue occupancy alone assumes that the upstream and downstream queue occupancies (denoted as $Q_{US}$ and $Q_{DS}$ respectively) are tightly correlated with the amount of upstream and downstream offered traffic so that, based on these queue occupancies, the split between upstream and downstream can be set to reflect the actual upstream and downstream traffic sent. While this assumption is valid in case of non-elastic sources in overload, it no longer applies for sources that generate traffic controlled by TCP. Indeed, because tail-drop queues only drop packets if the queue overflows, and hence TCP only stops hunting for more throughput when a queue overflows, queues are always full or nearly full and the buffer occupancy does not contain accurate information to set the split between upstream and downstream link rates.

Furthermore, older AQMs, like Random Early Discard (RED), drop or mark more packets if the queue occupancy increases, and less packets if the queue occupancy decreases. The queue occupancy tends to a steady state working point which reflects the offered traffic to some extent, but exposes large random fluctuations around that steady state value. Modern AQMs, like Proportional Integral Enhanced (PIE) and Proportional Integral Squared (PI²), try to keep the queue delay around a target value by dropping (or marking) more if the delay is or tends to a value larger than a target delay, and less if the delay is or tends to a value smaller than the target delay. The fluctuations around the target value are less than with older AQMs, but the target delay itself does not reflect the amount of offered traffic. So, for both older and modern AQMs, albeit for different reasons, the buffer occupancy does not accurately reflect the amount of offered traffic, and hence, is a poor source of information to set the split between upstream and downstream.

For these reasons a DRA algorithm that solely relies on queue occupancy (or delay) tends to perform poorly in case sources are TCP controlled as the queue occupancy is poorly correlated with the offered traffic. As the upstream and downstream queues are independently controlled, the working point of DRA will most probably converge to a split between upstream and downstream that reflects the steady state queue sizes on each side. Moreover, there might be lots of fluctuations around this working point with tail-drop and old AQMs like RED. In some cases, the decrease in performance may be as large as 50%.

Another kind of known DRA algorithms operates under the assumption of non-elastic sources. If there is no overload ($I_{US} + I_{DS} \leq C_{US} + C_{DS}$), the DRA algorithm has some room to manoeuvre: it only needs to aim at offering more link rate than offered load in each direction ($C_{US} > I_{US}$ and $C_{DS} > I_{DS}$). One way of achieving this is to:

- monitor the load in both directions, i.e. $\rho_{US}=I_{US}/C_{US}$ and $\rho_{DS}=I_{DS}/C_{DS}$;
- increase $C_{US}$ at the expense of $C_{DS}$ if pus exceeds a threshold (say 90%);
- increase $C_{DS}$ at the expense of $C_{US}$ if $\rho_{DS}$ exceeds a threshold (say 90%).

When there is overload ($I_{US} + I_{DS} > C_{US} + C_{DS}$), this strategy no longer works and is replaced by a strategy that aims at equalling the loads $\rho_{US}$ and $\rho_{DS}$.

**Summary of the Invention**

It is an object of the present invention to elaborate a method for controlling traffic congestion and corresponding traffic congestion controller that do not exhibit the inherent drawbacks and/or shortcomings of the known methods.

In accordance with a first aspect of the invention, a method for controlling traffic congestion over a communication link comprises gathering upstream and downstream queue occupancies of respective upstream and downstream queues at opposite sides of the communication link wherein upstream and downstream traffics are respectively queued, determining an aggregate queue occupancy for a virtual queue aggregating the upstream and downstream queued traffics based on the upstream and downstream queue occupancies, determining an aggregate dropping or marking probability based on the aggregate queue occupancy, and jointly dropping or marking upstream and downstream data packets at one side of the communication link based on the aggregate dropping or marking probability.

In one embodiment of the invention, the aggregate dropping or marking probability is determined in order to keep the aggregate queue occupancy or an aggregate queuing delay through the virtual queue around a target aggregate queue occupancy or queuing delay value.

In a further embodiment of the invention, the aggregate dropping or marking probability is determined by means of a PIE or PI² algorithm.

In one embodiment of the invention, the method further comprises adjusting upstream and downstream link rates based on the upstream and downstream queue occupancies in order to keep the upstream and downstream queue occupancies or upstream and downstream queuing delays through the respective upstream and downstream queues around a common target queue occupancy or queuing delay value.

In a further embodiment of the invention, the upstream and downstream link rates are adjusted within allowable bounds as:

$$\begin{cases} C_{US} = \dfrac{Q_{US}}{Q_{US}+Q_{DS}} C_{TOT} \\[2em] C_{DS} = \dfrac{Q_{DS}}{Q_{US}+Q_{DS}} C_{TOT} \end{cases},$$

wherein $C_{TOT}$ denotes a total aggregate link rate over the communication link, $Q_{US}$ and $Q_{DS}$ denote the respective gathered upstream and downstream queue occupancies, and $C_{US}$ and $C_{DS}$ denote the respective adjusted upstream and downstream link rates.

Alternatively, the upstream and downstream link rates are adjusted within allowable bounds as:

$$\begin{cases} C_{US} = \dfrac{C_{TOT} + (E_{US} - E_{DS})}{2} + \dfrac{2(Q_{US} - Q_{DS}) - (Q_{US}^{OLD} - Q_{DS}^{OLD})}{2\Delta} \\ C_{DS} = \dfrac{C_{TOT} + (E_{DS} - E_{US})}{2} + \dfrac{2(Q_{DS} - Q_{US}) - (Q_{DS}^{OLD} - Q_{US}^{OLD})}{2\Delta} \end{cases}$$

wherein $C_{TOT}$ denotes a total aggregate link rate over the communication link, $Q_{US}$ and $Q_{DS}$ denote the respective newly gathered upstream and downstream queue occupancies, $Q_{US}^{OLD}$ and $Q_{DS}^{OLD}$ denote the respective previously gathered upstream and downstream queue occupancies, $E_{US}$ and $E_{DS}$ denote respective egress rates of the upstream and downstream queues, $\Delta$ denotes an observation time interval between the newly and previously gathered queue occupancies, and $C_{US}$ and $C_{DS}$ denote the respective adjusted upstream and downstream link rates.

In one embodiment of the invention, the upstream and downstream link rates are adjusted by altering respective numbers of DMT symbols devoted to upstream and downstream communications and/or by altering respective numbers of tones devoted to upstream and downstream communications.

In one embodiment of the invention, the method further comprises, by a communication unit at the one side of the communication link, sending a message to a peer communication unit at a peer opposite side of the communication link whereby dropping or marking by the peer communication unit of data packets to be transmitted over the communication link is disabled.

In a further embodiment of the invention, the sending is performed prior to the joint dropping or marking of upstream and downstream data packets at the one side of the communication link.

In accordance with another aspect of the invention, a traffic congestion controller for controlling traffic congestion over a communication link is configured to gather upstream and downstream queue occupancies of respective upstream and downstream queues at opposite sides of the communication link wherein upstream and downstream traffics are respectively queued, to determine an aggregate queue occupancy for a virtual queue aggregating the upstream and downstream queued traffics based on the upstream and downstream queue occupancies, to determine an aggregate dropping or marking probability based on the aggregate queue occupancy, and to jointly drop or mark upstream and downstream data packets at one side of the communication link based on the aggregate dropping or marking probability.

Such a traffic congestion controller preferably forms part of an access node, such as a Digital Subscriber Line Access Multiplexer (DSLAM) for xDSL communication over a point-to-point communication link, or a DPU for G.fast communication over a point-to-point communication link, or a Cable Modem Termination System (CMTS) for DOCSIS communication over a point-to-multipoint communication link.

Such a traffic congestion controller may alternatively form part of a subscriber device, such as a xDSL or G.fast residential gateway, or a DOCSIS Cable Modem (CM).

Embodiments of a traffic congestion controller according to the invention correspond with the aforementioned embodiments of a method for controlling traffic congestion.

We start from the following hindsights:

- For a DRA algorithm to work properly, it needs more inputs from both AQMs (one for upstream traffic and one for downstream traffic) than just the queue occupancy.
- The current standard only allows the residential gateway to convey its queue occupancy to the access node.
- An AQM algorithm only needs the queue occupancy (and configured link rate) to take dropping or marking decisions.
- It does not matter if the upstream dropping or marking is performed in the residential gateway or in the access node, as long as only one of them drops or marks and the other one does not. In particular, the end-points where TCP runs do not notice where the dropping or making was actually performed.

Therefore, we propose to perform some kind of joint AQM for both the upstream and downstream traffic flows at one side of the communication link, typically at the network side of the communication link. We assume that the buffer in the residential gateway is large enough so that under normal circumstances it drops no packets. The buffer should however not be too large to avoid that in overload situations caused by non-elastic traffic a too large delay would be introduced. We further assume that that there is a means to disable the AQM in the residential gateway. To perform the upstream AQM in the access node, the residential gateway only needs to communicate its queue occupancy to the access node.

Since both AQM algorithms now run locally, we further propose to combine them, i.e. we run only one joint AQM operating on the sum of the upstream and downstream queue occupancies. The aim of this joint AQM is to keep this sum of upstream and downstream queue occupancies (or queuing delays) under control. Concretely, this joint AQM ensures that the average queuing delay pertaining to all packets is close to a target value.

Since in this joint arrangement the DRA algorithm has the role of a scheduling algorithm, we further propose a scheduler that serves packets from the joint queue in such a way that not only the queuing delay averaged over all packets is kept under control, but also the respective queuing delays of the upstream and downstream packets.

## Detailed Description of the Invention

Various example embodiments will now be described more fully with reference to the accompanying drawings wherein:

- fig. 1 and 2 represent a first prior art embodiment for controlling traffic congestion over a point-to-point communication link; and
- fig. 3 and 4 represent a second embodiment according to the invention for controlling traffic congestion over a point-to-point communication link.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPU), Digital Signal Processors (DSP), Application Specific Integrated Circuits (ASIC), Field Programmable Gate Arrays (FPGA), System-on-Chip (SoC), microcontroller, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of example embodiments are typically encoded on some form of tangible (or recording) storage medium. The tangible storage medium may be magnetic (e.g., a floppy disk or a hard drive), optical (e.g., a compact disk read only memory, or "CD ROM"), and may be read-only memory (ROM), random access memory (RAM), flash memory (e.g., USB flash drives, memory cards, memory sticks, etc.), for example. The terms "tangible storage medium" and "memory" may be used interchangeably. Example embodiments are not limited by these aspects of any given implementation.

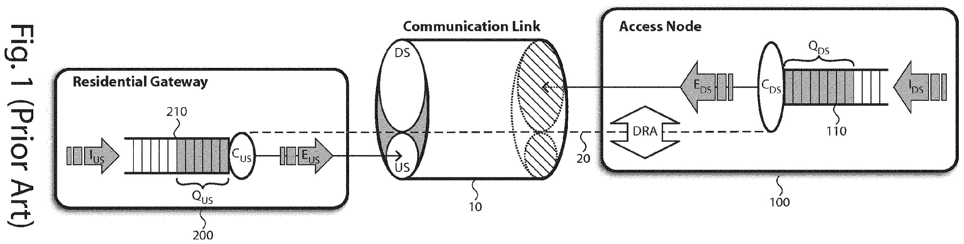

There is seen in fig. 1 a portion of a data communication network comprising a first communication unit 100 communicatively coupled through a communication link 10 to a peer communication unit 200. Presently, the communication link 10 is a bi-directional point-to-point communication link operated according to G.fast communication standard (G.9700/G.9701), the first communication unit 100 is a DPU and the second peer communication unit 200 is a G.fast residential gateway.

The DPU 100 provides broadband bi-directional communication access to a subscriber through the communication link 10. Bi-directional traffic is conveyed through the communication link 10: upstream traffic (US) refers to traffic flowing from the residential gateway 200 towards the DPU 100, whereas downstream traffic (DS) refers to traffic flowing from the DPU 100 towards the residential gateway 200.

Traffic conveyed over the communication link 10 includes various traffic sub-flows originating from different user terminals or servers, or related to different applications or services. The traffic sub-flows include non-elastic traffic sub-flows wherein the end-points send data packets at a pre-determined fixed or variable rate irrespective of any traffic congestion occurring along the communication path, such as UDP traffic, and elastic traffic sub-flows wherein the end-points adapt their respective sending rate to the congestion state of the communication path by monitoring the amounts of data packets dropped or marked for congestion, such as TCP traffic.

Also, the various traffic sub-flows may include different classes of traffic with respective Quality of Service (QoS) requirements and thus different scheduling priorities, such as Best-Effort traffic, Low-Latency traffic, etc. These different classes of traffic are typically held into respective upstream and downstream queues before further transmission over the communication link. These queues are served by a scheduler based on their respective scheduling priorities.

In the following, and for the ease of the description, a single class of traffic will be assumed with a single upstream queue 210 at the residential gateway 200 wherein upstream data packets (or data frames) are held before further transmission over the communication link 10 towards the DPU 100, and a single downstream queue 110 in the DPU 100 wherein downstream data packets are held before further transmission over the communication link 10 towards the residential gateway 200. Extension to multiple classes of service with multiple upstream and downstream queues will be addressed at the end of description.

The current occupancy levels of the upstream and downstream queues are denoted as $Q_{US}$ and $Q_{DS}$ respectively, and are typically expressed as a number of bytes held in the upstream queue 210 and the downstream queue 110 respectively, and that are to be transmitted over the communication link 10 in upstream and downstream directions respectively.

The communication link 10 supports a given aggregate link rate $C_{TOT}$, which is split into an upstream link rate Cus and a downstream link rate $C_{DS}$, with $C_{TOT}=C_{US}+C_{DS}$. The split between the upstream link rate $C_{US}$ and the downstream link rate $C_{DS}$ can be dynamically adjusted by a DRA algorithm during showtime operation (see dotted line 20 in fig. 1 that determines the split between upstream and downstream capacities).

In G.fast, the split is adjusted by allocating more or less DMT symbol positions within the TDD frame to upstream or downstream communications, thereby yielding a given US/DS ratio denoting the ratio between the numbers of DMT symbols positions within a TDD frame devoted to upstream and downstream communications. This ratio can be adjusted within given allowable bounds by means of iDTA if adjustment is carried out independently over each communication link, or cDTA when a common US/DS ratio is synchronously enforced over a plurality of communication links.

The ingress rates with which the upstream queue 210 and the downstream queue 110 are filled are denoted as $I_{US}$ and $I_{DS}$, and correspond to the offered traffic loads in upstream and downstream directions respectively.

The egress rates with which the upstream queue 210 and the downstream queue 110 are served are denoted as $E_{US}$ and $E_{DS}$ respectively. The upstream egress rate $E_{US}$ and the downstream egress rate $E_{DS}$ cannot exceed the configured upstream link rate $C_{US}$ and the configured downstream link rate $C_{DS}$ respectively, but may be lower if there is no more data packets to be served from the queue and the queue gets empty, that is to say when $I_{US} < C_{US}$ or $I_{DS} < C_{DS}$.

It will be further assumed that the traffic transiting over the communication link 10 mostly consists of elastic traffic. If the amount of non-elastic traffic is known or can be estimated or derived by appropriate traffic measurements or probing, then the link rates $C_{US}$, $C_{DS}$ and $C_{TOT}$ can be adjusted to account for this amount and to match the upstream and downstream throughputs available for elastic traffic.

Also, the communication link 10 conveys some traffic overhead, such as encoding and framing overhead, or additional control or management traffic. Again, the link rates $C_{US}$, $C_{DS}$ and $C_{TOT}$ can be adjusted to account for this traffic overhead and to match the actual upstream and downstream throughputs available at the output of the upstream and downstream queues.

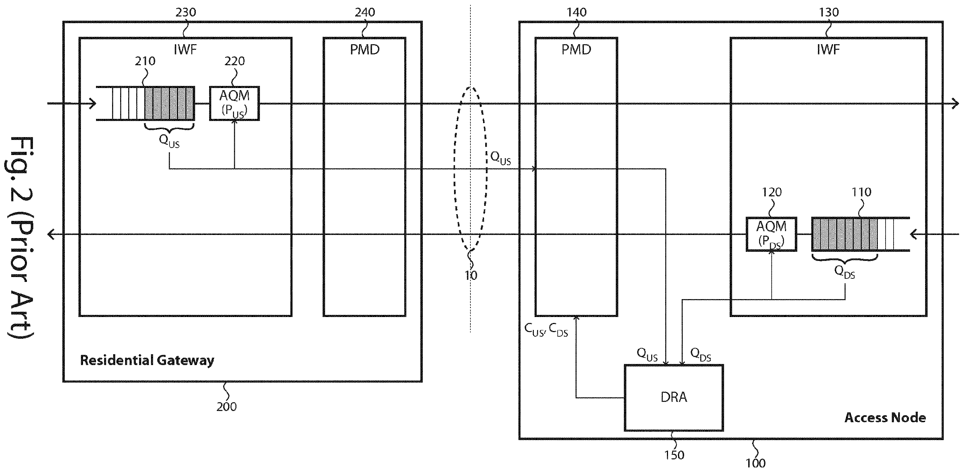

There is seen in fig. 2 further details about the residential gateway 200 and the DPU 100 and corresponding information flows.

Active traffic congestion control is typically provisioned at each side of the communication link 10: the residential gateway 200 accommodates an AQM unit 220 for dropping or marking for congestion, e.g. Early Congestion Notification (ECN) marking, the upstream data packets pulled out from the upstream queue 210 before transmission over the communication link 10; and the DPU 100 accommodates an AQM unit 120 for dropping or marking for congestion the downstream data packets pulled out from the downstream queue 210 before transmission over the communication link 10. The dropping or marking of the upstream and downstream data packets is performed in accordance with upstream and downstream dropping or marking probabilities $P_{US}$ and $P_{DS}$ respectively.

The upstream and downstream AQM units 120 and 220 take individual decisions with which probability to drop or mark packets. They individually determine the dropping or marking probability $P_{US}$ and $P_{DS}$ for the upstream and downstream directions based on observations of the upstream and downstream queue occupancies $Q_{US}$ and $Q_{DS}$ respectively, or on the upstream and downstream queuing delays $Q_{US}/C_{US}$ and $Q_{DS}/C_{DS}$ respectively.

These dropping or marking probabilities indicate to the end points at which rate they can send traffic, and hence these probabilities impact the upstream and downstream offered traffic $I_{US}$ and $I_{DS}$ respectively. These amounts of offered traffic feed the respective queues and this may result in one of the upstream or downstream queue being built up if the offered traffic $I_{US}$ or $I_{DS}$ exceeds the link rate $C_{US}$ or $C_{DS}$ respectively configured by the DRA algorithm.

The upstream queue 210 and the upstream AQM unit 220 typically forms part of an interworking function (IWF) 230 for rate adaptation and interface towards a communication Physical Medium Dependent (PMD) chipset 240 coupled to the communication link 10. The upstream queue 210 and/or the upstream AQM unit 220 may be located somewhere else along the upstream transmit path within the residential gateway 200, for instance within the communication chipset 240.

Similarly, the downstream queue 110 and the downstream AQM unit 120 typically forms part of an interworking function (IWF) 130 for rate adaptation and interface towards a communication chipset 140 coupled to the communication link 10. The downstream queue 110 and/or the downstream AQM unit 120 may be located somewhere else along the downstream transmit path within the DPU 100, for instance within the communication chipset 140.

The DPU 100 further comprises a DRA unit 150. The DRA unit 150 adjusts the upstream link rate $C_{US}$ and the downstream link rate $C_{DS}$ by modifying the US/DS ratio of the communication link 10 based on the observed upstream and downstream queue occupancies $Q_{US}$ and $Q_{DS}$. The upstream queue occupancy $Q_{US}$ is reported to the DPU 100 through the communication link 10, and the downstream queue occupancy $Q_{DS}$ is locally available. The so-adjusted US/DS ratio is then passed to the communication chipset 140 for further enforcement over the communication link 10 in coordination with the peer communication chipset 240.

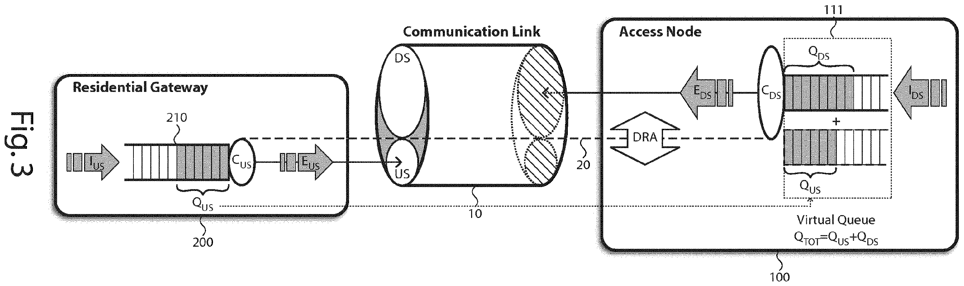

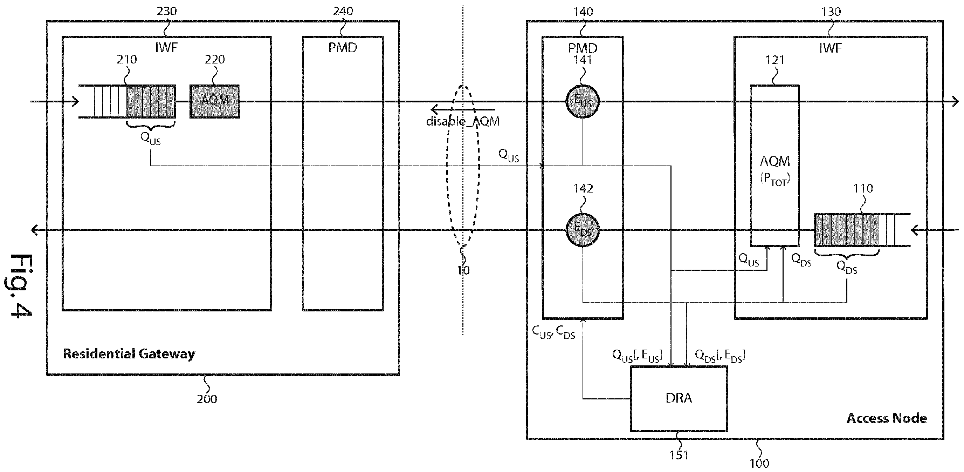

Fig. 3 and 4, which are the counterparts of fig. 1 and 2 respectively, contrast this prior art approach with the approach of the invention.

AQM no longer runs within the residential gateway 200. In case there is an AQM module in the residential gateway 200, it is disabled by the DPU 100 sending a disable_AQM message to the residential gateway 200 (see grayed AQM unit 220 in fig. 4). This message can be sent through the Special Operation Channel (SOC) during line initilization, e.g. as one of the line parameters telling the residential gateway 200 whether the upstream AQM function is enabled or disabled, or through the Embedded Operation Channel (EOC) during showtime operation. The upstream queue 210 in the residential gateway 200 is assumed to be large enough so that tail-drop never occurs.

In the DPU 100, a new AQM unit 121 runs a joint AQM algorithm. This joint AQM algorithm observes the local downstream queue to obtain $Q_{DS}$, and receives the remote queue occupancy $Q_{US}$ from the residential gateway 200 in a standard way. As depicted in fig. 3, AQM is now performed on a virtual queue 111 aggregating both the upstream and downstream queued traffic. The queue occupancy $Q_{TOT}$ of the virtual queue 111 is the sum of the upstream and downstream queue occupancies, i.e. $Q_{TOT}=Q_{US}+Q_{DS}$. The joint AQM algorithm tries to keep this virtual queue under control by determining an aggregate dropping or marking probability $P_{TOT}$ with which to drop or mark packets in both directions.

Preferably, the joint AQM algorithm aims at keeping the average queuing delay of all packets under control. The queuing delay through the virtual queue 111 is $Q_{TOT}/C_{TOT} = (Q_{US}+Q_{DS}) / (C_{US}+C_{DS})$. The PIE or PI² algorithm is used to keep this queuing delay around a target value $d_{ref}$, typically 10ms to 20ms.

At the DPU side, the AQM unit 121 now enforces the aggregate dropping or marking probabilities $P_{TOT}$ on both the downstream data packets pulled out from the downstream queue 110 and the upstream data packets received from the communication chipset 140.

Preferably, the dropping or marking probability is the same in both directions, i.e. $P_{US}=P_{DS}=P_{TOT}$. Choosing the same dropping or marking probability in both directions ensures flow fairness between upstream and downstream communications.

Alternatively, the upstream and downstream dropping or marking probabilities can be chosen differently to favour one direction over the other, for instance based on the number of traffic sub-flows in each direction, still respecting that the total dropping or marking probability equals $P_{TOT}$.

A new DRA unit 151 takes the upstream and downstream queue occupancies $Q_{US}$ and $Q_{DS}$, and possibly the upstream and downstream egress rates $E_{US}$ and $E_{DS}$ (square brackets in fig. 4 denotes optional parameters), as inputs and adjusts the upstream and downstream link rates $C_{US}$ and $C_{DS}$ accordingly. The upstream and downstream egress rates $E_{US}$ and $E_{DS}$ are locally available: the upstream egress rate $E_{US}$ is typically determined by the receiving part of the communication chipset 140, and the downstream egress rate $E_{DS}$ is typically determined by the transmitting part of the communication chipset 140 (see measurements points 141 and 142 in fig. 4). The queue occupancies and egress rates are measured and reported every $\Delta$ seconds to the DRA unit 151, $\Delta$ being the observation period.

Ensuring that the average queuing delay hovers around $d_{ref}$ value by means of joint AQM is not enough. The DRA unit 151 needs to tune the link rates $C_{US}$ and $C_{DS}$ such that the upstream and downstream data packets incur the same target delay.

The simplest way of doing this, is to adjust the upstream and downstream link rates as:

$$\begin{cases} C_{US}=\dfrac{Q_{US}}{Q_{US}+Q_{DS}}C_{TOT} \\[2em] C_{DS}=\dfrac{Q_{DS}}{Q_{US}+Q_{DS}}C_{TOT} \end{cases} \quad (1).$$

It can be immediately seen that, since $(Q_{DS}+Q_{US})/(C_{DS}+C_{US}) \approx d_{ref}$, also $Q_{DS}/C_{DS} \approx d_{ref}$ and $Q_{US}/C_{US} \approx d_{ref}$.

Rather than using the current queue occupancies, also the evolution of the queue occupancies over one or more past intervals of length $\Delta$ can be taken into account. In this case, and assuming a single tap memory, the upstream and downstream link rates are adjusted as:

$$\begin{cases} C_{US}=\dfrac{C_{TOT}+\left(E_{US}-E_{DS}\right)}{2}+\dfrac{2\left(Q_{US}-Q_{DS}\right)-\left(Q_{US}^{OLD}-Q_{DS}^{OLD}\right)}{2\Delta} \\[2em] C_{DS}=\dfrac{C_{TOT}+\left(E_{DS}-E_{US}\right)}{2}+\dfrac{2\left(Q_{DS}-Q_{US}\right)-\left(Q_{DS}^{OLD}-Q_{US}^{OLD}\right)}{2\Delta} \end{cases} \quad (2),$$

where the queue occupancy values in the previous slot have a subscript "old".

Eq. (2) is derived as follows. The upstream and downstream link rates $C_{US}(t)$ and $C_{DS}(t)$ at time t are chosen such that, at time $t+\Delta$, the predicted upstream and downstream queue occupancy are equal. This leads to the equation:

$$Q_{US}(t)+\left(I_{US}(t)-C_{US}(t)\right)\cdot\Delta=Q_{DS}(t)+\left(I_{DS}(t)-C_{DS}(t)\right)\cdot\Delta \quad (3).$$

wherein it is assumed that, in the next observation slot, the queues will not become empty and hence that the egress rates match the link rates.

The sum of the upstream and downstream link rates is equal to the total link rate, or:

$$C_{US}(t)+C_{DS}(t)=C_{TOT}(t) \quad (4).$$

The solution to this set of equations is:

$$\begin{cases} C_{US}(t) = \dfrac{C_{TOT}(t)}{2} + \dfrac{I_{US}(t) - I_{DS}(t)}{2} + \dfrac{Q_{US}(t) - Q_{DS}(t)}{2\Delta} \\ C_{DS}(t) = \dfrac{C_{TOT}(t)}{2} + \dfrac{I_{DS}(t) - I_{US}(t)}{2} + \dfrac{Q_{DS}(t) - Q_{US}(t)}{2\Delta} \end{cases} \quad (5).$$

Since the ingress rates are not available, they need to be estimated. One way to do this is to calculate the ingress rate over the past slot based on the egress rate and the queue occupancy over the past slot, and to assume that ingress rates do not change a lot from one slot to the next, which gives:

$$\begin{cases} I_{US}(t) = E_{US}(t) + \dfrac{Q_{US}(t) - Q_{US}(t-\Delta)}{\Delta} \\ I_{DS}(t) = E_{DS}(t) + \dfrac{Q_{DS}(t) - Q_{DS}(t-\Delta)}{\Delta} \end{cases} \quad (6).$$

Substituting these in the relations above eventually yields eq. (2).

In both cases, if one of the new link rates, $C_{US}$ or $C_{DS}$, is too large, it is tuned down to avoid that one direction starves the other one. In particular:

- if $C_{US} > \beta C_{TOT}$, then the upstream link rate is upper-bounded and the downstream link rate is lower-bounded as:

$$\begin{cases} C_{US} = \beta C_{TOT} \\ C_{DS} = (1 - \beta) C_{TOT} \end{cases} \quad (7);$$

and

- if $C_{DS} > \beta C_{TOT}$, then the downstream link rate is upper-bounded and the upstream link rate is lower-bounded as:

$$\begin{cases} C_{DS} = \beta C_{TOT} \\ C_{US} = (1 - \beta) C_{TOT} \end{cases} \quad (8),$$

where $\beta$ is a guard rate parameter.

The upstream and downstream link rates $C_{US}$ or $C_{DS}$ may be further adjusted to account for traffic overhead and/or non-elastic traffic headroom.

As a final step, a new US/DS ratio is derived that will eventually determine the actual upstream and downstream link rates configured over the communication link 10. The new US/DS ratio is passed to the communication chipset 140 for further enforcement over the communication link 10 in coordination with the peer communication chipset 240.

The above use cases consider the iDTA setting. Instead, one may also consider the cDTA setting in which a common split between upstream and downstream link rates is controlled for multiple lines. This DRA algorithm can then make use of a weighted combination of upstream and downstream queues, to steer the common split between upstream and downstream towards a setting with improved flow fairness.

Another use case is to consider the cDTA-FDX (full duplex) setting in which a common split between upstream prioritized and downstream prioritized transmission is controlled for one or more lines.

If there are multiple upstream and downstream queues for different classes of traffic, then there are as many virtual queues defined as classes of service, for instance one virtual queue $111_{BE}$ for Best-Effort (BE) traffic, another distinct virtual queue $111_{LL}$ for Low-Latency (LL) traffic, etc. The residential gateway 200 is then expected to report upstream queue occupancies per traffic class, for instance $Q_{US,BE}$, $Q_{US,LL}$, etc, so as the AQM unit 121 can build up the corresponding virtual queues for the respective classes of service.

Then an aggregate dropping or marking probability is determined for each one of the virtual queues and thus for each one of the classes of service. Each of the classes has its own reference delay, for instance $d_{ref,BE}$, $d_{ref,LL}$, etc, and its own pre-configured aggregate rate associated to the class, for instance $C_{TOT,BE}$, $C_{TOT,LL}$, etc, typically defined as a dedicated fraction of the overall aggregate link rate $C_{TOT}$. Based on these, within each class, one aggregate dropping or marking probability can be determined with the above method for one single traffic class, for instance a first aggregate dropping or marking probability $P_{TOT,BE}$ for BE traffic, and another (probably distinct) dropping or marking probability $P_{TOT,LL}$ for LL traffic, etc. The so-determined aggregate dropping or marking probabilities are jointly enforced in both directions of communication for the respective classes of service by the single AQM unit 121.

For DRA, the US/DS split within each traffic class is first calculated based on the above formula for one single traffic class, with the upstream and downstream queue occupancies associated with the class and the pre-configured aggregate link rate per class. Subsequently, all upstream, respectively downstream, link rates associated to each traffic class are summed to obtain the link rate to be associated to the traffic of all upstream, respectively downstream, traffic classes.

Still another use case is to consider point-to-multipoint transmission, such as full-duplex DOCSIS communication over a cable plant. In this case, the AQM unit 121 aggregates the downstream queued traffic and the individual upstream queued traffic of the various CMs into one single virtual queue, meaning that $Q_{TOT}=Q_{DS}+Q_{US1}+Q_{US2}+...$, wherein $Q_{US1}$, $Q_{US2}$, etc denote the respective upstream queue occupancies of $CM_1$, $CM_2$, etc.

DRA relies upon the dynamic allocation of the communication resources to the various CMs and/or the dynamic adjustment of the FDD configurations of the various CMs in order to trade-off the upstream and downstream link rates. For a particular user, the upstream and downstream link rates can be controlled with the proposed invention to obtain per-user flow fairness, i.e. all upstream and downstream TCP flows of a user are forced towards similar throughput which can be further combined with equalized queue size or delay objectives.

For point-to-point VDSL2 communications, no mechanism is foreseen for easily re-allocating a part of the upstream communication resources to downstream communications and vice-versa: upstream and downstream communications have to take place within pre-determined frequency bands. Yet, one could rely on beam forming with appropriate precoding and postcoding matrices at the access node in order to boost the upstream or downstream link rate for a particular user, and further to improve flow fairness for that particular user.

Although the joint AQM unit 121 is typically implemented at the network side of the communication link 10 within the DPU 100, it may be moved as well to the subscriber side of the communication link 10 within the residential gateway 200, in which case the downstream queue occupancy $Q_{DS}$ is reported by the DPU 100 to the residential gateway 200. The DRA unit 151 would typically remain at the network side of the communication link 10 as multi-line coordination is often desired.

**List of Abbreviations**

| | |
|---|---|
| AQM | Active Queue Management |
| cDTA | coordinated DTA |
| CM | Cable Modem |
| DRA | Dynamic Resource Allocation |
| DSL | Digital Subscriber Line |
| DSLAM | DSL Access Multiplexer |
| DPU | Distribution Point Unit |
| DS | DownStream |
| DTA | Dynamic Time Assignment |
| ECN | Early Congestion Notification |
| iDTA | independent DTA |
| FDD | Frequency Division Duplexing |
| FDX | Full Duplex |
| PI2 | Proportional Integral squared |
| PIE | Proportional Integral Enhanced |
| QoS | Quality of Service |
| RED | Random Early Discard |
| TCP | Transmission Control Protocol |
| TDD | Time Division Duplexing |
| UDP | User Datagram Protocol |
| US | UpStream |

Claims

1. **A method** for controlling traffic congestion over **a communication link** (10), *wherein* the method comprises gathering **upstream and downstream queue occupancies** ($Q_{US}$; $Q_{DS}$) of respective **upstream and downstream queues** (210; 110) at opposite sides of the communication link wherein **upstream and downstream traffics** are respectively queued, determining **an aggregate queue occupancy** ($Q_{TOT}$) for **a virtual queue** (111) aggregating the upstream and downstream queued traffics based on the upstream and downstream queue occupancies, determining **an aggregate dropping or marking probability** ($P_{TOT}$) based on the aggregate queue occupancy, and jointly dropping or marking upstream and downstream data packets at **one side of the communication link** based on the aggregate dropping or marking probability.

2. **A method** according to claim 1, *wherein* the aggregate dropping or marking probability is determined in order to keep the aggregate queue occupancy or **an aggregate queuing delay** through the virtual queue around **a target aggregate queue occupancy or queuing delay value.**

3. **A method** according to claim 2, *wherein* the aggregate dropping or marking probability is determined by means of a Proportional Integral Enhanced PIE or Proportional Integral Squared PI$^2$ algorithm.

4. **A method** according to claim 1, *wherein* the method further comprises adjusting **upstream and downstream link rates** ($C_{US}$; $C_{DS}$) based on the upstream and downstream queue occupancies in order to keep the upstream and downstream queue occupancies or **upstream and downstream queuing delays** through the respective upstream and downstream queues around **a common target queue occupancy or queuing delay value.**

5. **A method** according to claim 4, *wherein* the upstream and downstream link rates are adjusted within allowable bounds as:

$$\begin{cases} C_{US} = \dfrac{Q_{US}}{Q_{US} + Q_{DS}} C_{TOT} \\[2em] C_{DS} = \dfrac{Q_{DS}}{Q_{US} + Q_{DS}} C_{TOT} \end{cases},$$

*and wherein* $C_{TOT}$ denotes a total aggregate link rate over the communication link, $Q_{US}$ and $Q_{DS}$ denote the respective gathered upstream and downstream queue occupancies, and $C_{US}$ and $C_{DS}$ denote the respective adjusted upstream and downstream link rates.

6. **A method** according to claim 4, *wherein* the upstream and downstream link rates are adjusted within allowable bounds as:

$$\begin{cases} C_{US} = \dfrac{C_{TOT} + \left( E_{US} - E_{DS} \right)}{2} + \dfrac{2 \left( Q_{US} - Q_{DS} \right) - \left( Q_{US}^{OLD} - Q_{DS}^{OLD} \right)}{2 \Delta} \\[2em] C_{DS} = \dfrac{C_{TOT} + \left( E_{DS} - E_{US} \right)}{2} + \dfrac{2 \left( Q_{DS} - Q_{US} \right) - \left( Q_{DS}^{OLD} - Q_{US}^{OLD} \right)}{2 \Delta} \end{cases},$$

*and wherein* $C_{TOT}$ denotes a total aggregate link rate over the communication link, $Q_{US}$ and $Q_{DS}$ denote the respective newly gathered upstream and downstream queue occupancies, $Q_{US}^{OLD}$ and $Q_{DS}^{OLD}$ denote the respective previously gathered upstream and downstream queue occupancies, $E_{US}$ and $E_{DS}$ denote respective egress rates of the upstream and downstream queues, $\Delta$ denotes an observation time interval between the newly and previously gathered queue occupancies, and $C_{US}$ and $C_{DS}$ denote the respective adjusted upstream and downstream link rates.

7. **A method** according to any of claims 4 or 6, *wherein* the upstream and downstream link rates are adjusted by altering respective numbers of Discrete Multi-Tone DMT symbols devoted to upstream and downstream communications and/or by altering respective numbers of tones devoted to upstream and downstream communications.

8. **A method** according to claim 1, *wherein* the method further comprises, by **a communication unit** (100) at the one side of the communication link, sending **a message** (disable_AQM) to **a peer communication unit** (200) at **a peer side of the communication link** whereby dropping or marking by the peer communication unit of data packets to be transmitted over the communication link is disabled.

9. **A method** according to claim 8, *wherein* the sending step is performed prior to the joint dropping or marking of upstream and downstream data packets at the one side of the communication link.

10. **A traffic congestion controller** (121) for controlling traffic congestion over **a communication link** (10), *wherein* the traffic congestion controller is configured to gather **upstream and downstream queue occupancies** ($Q_{US}$; $Q_{DS}$) of respective **upstream and downstream queues** (210; 110) at opposite sides of the communication link wherein **upstream and downstream traffics** are respectively queued, to determine **an aggregate queue occupancy** ($Q_{TOT}$) for **a virtual queue** (111) aggregating the upstream and downstream queued traffics based on the upstream and downstream queue occupancies, to determine **an aggregate dropping or marking probability** ($P_{TOT}$) based on the aggregate queue occupancy, and to jointly drop or mark upstream and downstream data packets at **one side of the communication link** based on the aggregate dropping or marking probability.

11. **A communication unit** (100) comprising **a traffic congestion controller** (121) according to claim 10, and to be coupled to the one side of the communication link.

12. **A communication unit** (100) according to claim 11, *wherein* the communication link is a point-to-point communication link, *and wherein* the communication unit is **a Digital Subscriber Line Access Multiplexer DSLAM** or **a G.fast Distribution Point Unit DPU.**

13. **A communication unit** according to claim 11, *wherein* the communication link is a point-to-multipoint communication link, *and wherein* the communication unit is **a Cable Modem Termination System CMTS.**

14. **A communication unit** according to claim 11, *wherein* the communication link is a point-to-point communication link, *and wherein* the communication unit is a Digital Subscriber Line xDSL residential gateway or a G.fast residential gateway.

15. **A communication unit** according to claim 11, *wherein* the communication link is a point-to-multipoint communication link, *and wherein* the communication unit is **a Cable Modem CM.**

## Patentansprüche

1. **Verfahren** zum Steuern von Verkehrsüberlastung über eine **Kommunikationsverbindung** (10), *wobei* das Verfahren Folgendes umfasst: Erfassen von **Upstream- und Downstream-Warteschlangenbelegungen** ($Q_{US}$; $Q_{DS}$) jeweiliger **Upstream- und Downstream-Warteschlangen** (210; 110) an entgegengesetzten Seiten der Kommunikationsverbindung, in denen **Upstream- bzw. Downstream-Verkehr** in eine Warteschlange eingereiht wird, Bestimmen einer **Aggregatwarteschlangenbelegung** ($Q_{TOT}$) für **eine virtuelle Warteschlange** (111), die den in die Warteschlange eingereihten Upstream- und Downstream-Verkehr basierend auf den Upstream- und Downstream-Warteschlangenbelegungen aggregiert, Bestimmen einer **Aggregat-Verwurfs- oder -Markierungswahrscheinlichkeit** ($P_{TOT}$) basierend auf der Aggregatwarteschlangenbelegung, und gemeinsames Verwerfen oder Markieren von Upstream- und Downstream-Datenpaketen an **einer Seite der Kommunikationsverbindung** basierend auf der AggregatVerwurfs- oder -Markierungswahrscheinlichkeit.

2. **Verfahren** nach Anspruch 1, *wobei* die AggregatVerwurfs- oder -Markierungswahrscheinlichkeit bestimmt wird, um die Aggregatwarteschlangenbelegung oder **eine Aggregatwarteschlangenverzögerung** durch die virtuelle Warteschlange um **einen Soll-Aggregatwarteschlangenbelegungs- oder -warteschlangenverzögerungswert** zu halten.

3. **Verfahren** nach Anspruch 2, *wobei* die Aggregatverwurfs- oder -Markierungswahrscheinlichkeit mittels eines Proportional-Integral-Enhanced- bzw. PIE-Algorithmus oder eines Proportional-Integral-Squared- bzw. PI²-Algorithmus bestimmt wird.

4. **Verfahren** nach Anspruch 1, *wobei* das Verfahren ferner Anpassen von **Upstream- und Downstream-Verbindungsraten** ($C_{US}$; $C_{DS}$) basierend auf den Upstream- und Downstream-Warteschlangenbelegungen umfasst, um die Upstream- und Downstream-Warteschlangenbelegungen oder **Upstream- und Downstream-Warteschlangenverzögerungen** durch die jeweiligen Upstream- und Downstream-Warteschlangen um **einen gemeinsamen Soll-Warteschlangenbelegungs- oder -warteschlangenverzögerungswert** zu halten.

5. **Verfahren** nach Anspruch 4, *wobei* die Upstream- und Downstream-Verbindungsraten innerhalb zulässiger Grenzen wie folgt angepasst werden:

$$\begin{cases} C_{US} = \dfrac{Q_{US}}{Q_{US}+Q_{DS}} C_{TOT}, \\ C_{DS} = \dfrac{Q_{DS}}{Q_{US}+Q_{DS}} C_{TOT} \end{cases}$$

*und wobei* $C_{TOT}$ eine Gesamtaggregatverbindungsrate über die Kommunikationsverbindung bezeichnet, $Q_{US}$ und $Q_{DS}$ die jeweiligen erfassten Upstream- und Downstream-Warteschlangenbelegungen bezeichnen und $C_{US}$ und $C_{DS}$ die jeweiligen angepassten Upstream- und Downstream-Verbindungsraten bezeichnen.

6. **Verfahren** nach Anspruch 4, *wobei* die Upstream- und Downstream-Verbindungsraten innerhalb zulässiger Grenzen wie folgt angepasst werden:

$$\begin{cases} C_{US} = \dfrac{C_{TOT}+(E_{US}-E_{DS})}{2} + \dfrac{2(Q_{US}-Q_{DS})-(Q_{US}^{OLD}-Q_{DS}^{OLD})}{2\Delta}, \\ C_{DS} = \dfrac{C_{TOT}+(E_{DS}-E_{US})}{2} + \dfrac{2(Q_{DS}-Q_{US})-(Q_{DS}^{OLD}-Q_{US}^{OLD})}{2\Delta} \end{cases}$$

*und wobei* $C_{TOT}$ eine Gesamtaggregatverbindungsrate über die Kommunikationsverbindung bezeichnet, $Q_{US}$ und $Q_{DS}$ die jeweiligen neu erfassten Upstream- und Downstream-Warteschlangenbelegungen bezeichnen, $Q_{US}^{OLD}$ und $Q_{DS}^{OLD}$ die jeweiligen zuvor erfassten Upstream- und Downstream-Warteschlangenbelegungen bezeichnen, $E_{US}$ und $E_{DS}$ jeweilige Ausgangsraten der Upstream- und Downstream-Warteschlangen bezeichnen, $\Delta$ ein Beobachtungszeitintervall zwischen den neu und zuvor erfassten Warteschlangenbelegungen bezeichnet und $C_{US}$ und $C_{DS}$ die jeweiligen angepassten Upstream- und Downstream-Verbindungsraten bezeichnen.

7. **Verfahren** nach einem der Ansprüche 4 oder 6, *wobei* die Upstream- und Downstream-Verbindungsraten durch Ändern jeweiliger Anzahlen von Discrete-Multi-Tone- bzw. DMT-Symbolen, die Upstream- und Downstream-Kommunikationen gewidmet sind, und/oder durch Ändern jeweiliger Anzahlen von Tönen, die Upstream- und Downstream-Kommunikationen gewidmet sind, angepasst werden.

8. **Verfahren** nach Anspruch 1, *wobei* das Verfahren ferner, durch **eine Kommunikationseinheit** (100) an der einen Seite der Kommunikationsverbindung, Senden **einer Nachricht** (disable_AQM) zu **einer Peer-Kommunikationseinheit** (200) an **einer Peer-Seite der Kommunikationsverbindung** umfasst, wodurch das Verwerfen oder Markieren von Datenpaketen, die über die Kommunikationsverbindung übertragen werden sollen, durch die Peer-Kommunikationseinheit deaktiviert wird.

9. **Verfahren** nach Anspruch 8, *wobei* der Sendeschritt vor dem gemeinsamen Verwerfen oder Markieren von Upstream- und Downstream-Datenpaketen an der einen Seite der Kommunikationsverbindung durchgeführt wird.

10. **Verkehrsüberlastungssteuerung** (121) zum Steuern von Verkehrsüberlastung über **eine Kommunikationsverbindung** (10), *wobei* die Verkehrsüberlastungssteuerung ausgelegt ist zum: Erfassen von **Upstream- und Downstream-Warteschlangenbelegungen** ($Q_{US}$; $Q_{DS}$) jeweiliger **Upstream- und Downstream-Warteschlangen** (210; 110) an entgegengesetzten Seiten der Kommunikationsverbindung, in denen **Upstream- bzw. Downstream-Verkehr** in eine Warteschlange eingereiht wird, Bestimmen einer **Aggregatwarteschlangenbelegung** ($Q_{TOT}$) für **eine virtuelle Warteschlange** (111), die den in die Warteschlange eingereihten Upstream- und Downstream-Verkehr basierend auf den Upstream- und Downstream-Warteschlangenbelegungen aggregiert, Bestimmen **einer AggregatVerwurfs- oder -Markierungswahrscheinlichkeit** ($P_{TOT}$) basierend auf der Aggregatwarteschlangenbelegung, und gemeinsames Verwerfen oder Markieren von Upstream- und Downstream-Datenpaketen an **einer Seite der Kommunikationsverbindung** basierend auf der AggregatVerwurfs- oder -Markierungswahrscheinlichkeit.

11. **Kommunikationseinheit** (100), die **eine Verkehrsüberlastungssteuerung** (121) nach Anspruch 10 umfasst und mit der einen Seite der Kommunikationsverbindung gekoppelt werden soll.

12. **Kommunikationseinheit** (100) nach Anspruch 11, *wobei* die Kommunikationsverbindung eine Punkt-zu-Punkt-Kommunikationsverbindung ist *und wobei* die Kommunikationseinheit **ein Zugangsmultiplexer einer digitalen Teilnehmerleitung bzw. DSLAM** oder **eine G.fast-Verteilungspunkteinheit bzw. DPU** ist.

13. **Kommunikationseinheit** nach Anspruch 11, *wobei* die Kommunikationsverbindung eine Punkt-zu-Punkt-Kommunikationsverbindung ist *und wobei* die Kommunikationseinheit **ein Kabelmodemabschlusssystem bzw. CMTS** ist.

14. **Kommunikationseinheit** nach Anspruch 11, *wobei* die Kommunikationsverbindung eine Punkt-zu-Punkt-Kommunikationsverbindung ist *und wobei* die Kommunikationseinheit ein Residential Gateway einer digitalen Teilnehmerleitung bzw. xDSL oder ein G.fast-Residential-Gateway ist.

15. **Kommunikationseinheit** nach Anspruch 11, *wobei* die Kommunikationsverbindung eine Punkt-zu-Punkt-Kommunikationsverbindung ist *und wobei* die Kommunikationseinheit **ein Kabelmodem bzw. CM** ist.

**Revendications**

1. Procédé pour réguler une congestion de trafic sur une liaison de communication (10), le procédé comprenant le recueil d'occupations de file d'attente en amont et en aval ($Q_{US}$; $Q_{DS}$) de files d'attente en amont et en aval respectives (210 ; 110) sur des côtés opposés de la liaison de communication, dans lequel des trafics en amont et en aval sont respectivement mis en file d'attente, la détermination d'une occupation de file d'attente d'agrégat ($Q_{TOT}$) pour une file d'attente virtuelle (111) agrégeant les trafics en amont et en aval mis en file d'attente en se basant sur les occupations de file d'attente en amont et en aval, la détermination d'une probabilité d'abandon ou de marquage d'agrégat ($P_{TOT}$) en se basant sur l'occupation de file d'attente d'agrégat et l'abandon ou le marquage de manière conjointe de paquets de données en amont et en aval sur un côté de la liaison de communication en se basant sur la probabilité d'abandon ou de marquage d'agrégat.

2. Procédé selon la revendication 1, dans lequel la probabilité d'abandon ou de marquage d'agrégat est déterminée afin de garder l'occupation de file d'attente d'agrégat ou un retard de mise en file d'attente d'agrégat par le biais de la file d'attente virtuelle autour d'une valeur d'occupation de file d'attente ou de retard de mise en file d'attente d'agrégat cible.

3. Procédé selon la revendication 2, dans lequel la probabilité d'abandon ou de marquage d'agrégat est déterminée au moyen d'un algorithme proportionnel, intégral amélioré, PIE, ou proportionnel, intégral mis au carré, PI$^2$.

4. Procédé selon la revendication 1, dans lequel le procédé comprenant en outre l'ajustement de débits de liaison en amont et en aval ($C_{US}$ ; $C_{DS}$) en se basant sur les occupations de file d'attente en amont et en aval afin de garder les occupations de file d'attente en amont et en aval ou les retards de mise en file d'attente d'agrégat par le biais des files d'attente en amont et en aval respectives autour d'une valeur d'occupation de file d'attente ou de retard de mise en file d'attente cible commune.

5. Procédé selon la revendication 4, dans lequel les débits de liaison en amont et en aval sont ajustés dans des limites admissibles telles que :

$$\begin{cases} C_{US} = \dfrac{Q_{US}}{Q_{US} + Q_{DS}} C_{TOT} \\ C_{DS} = \dfrac{Q_{DS}}{Q_{US} + Q_{DS}} C_{TOT} \end{cases},$$

et dans lequel $C_{TOT}$ représente un débit de liaison d'agrégat total sur la liaison de communication, $Q_{US}$ et $Q_{DS}$ représentent les occupations de file d'attente en amont et en aval recueillies respectives et $C_{US}$ et $C_{DS}$ représentent les débits de liaison en amont et en aval ajustés respectifs.

6. Procédé selon la revendication 4, dans lequel les débits de liaison en amont et en aval sont ajustés dans des limites admissibles telles que :

$$\begin{cases} C_{US} = \dfrac{C_{TOT} + (E_{US} - E_{DS})}{2} + \dfrac{2(Q_{US} - Q_{DS}) - (Q_{US}^{OLD} - Q_{DS}^{OLD})}{2\Delta} \\ C_{DS} = \dfrac{C_{TOT} + (E_{DS} - E_{US})}{2} + \dfrac{2(Q_{DS} - Q_{US}) - (Q_{DS}^{OLD} - Q_{US}^{OLD})}{2\Delta} \end{cases}$$

et dans lequel $C_{TOT}$ représente un débit de liaison d'agrégat total sur la liaison de communication, $Q_{US}$ et $Q_{DS}$ représentent les occupations de file d'attente en amont et en aval respectives recueillies récemment, $Q_{US}^{OLD}$ et $Q_{DS}^{OLD}$ représentent les occupations de file d'attente en amont et en aval respectives recueillies précédemment, $E_{US}$ et $E_{DS}$ représentent les débits de sortie respectifs des files d'attente en amont et en aval, $\Delta$ représente un intervalle de temps d'observation entre les occupations de file d'attente recueillies récemment et précédemment et $C_{US}$ et $C_{DS}$ représentent les débits de liaison en amont et en aval ajustés respectifs.

7. Procédé selon l'une quelconque des revendications 4 et 6, dans lequel les débits de liaison en amont et en aval sont ajustés en modifiant les nombres respectifs de symboles de multitonalité discrète, DMT, consacrés à des communications en amont et en aval et/ou en modifiant les nombres respectifs de tonalités consacrés à des communications en amont et en aval.

8. Procédé selon la revendication 1, le procédé comprenant en outre, au moyen d'une unité de communication (100), sur le côté de la liaison de communication, l'envoi d'un message (disable_AQM) à une unité de communication homologue (200) sur un côté homologue de la liaison de communication, grâce à quoi l'abandon ou le marquage par l'unité de communication homologue de paquets de données à transmettre sur la liaison de communication est désactivé.

9. Procédé selon la revendication 8, dans lequel l'étape d'envoi est réalisée avant l'abandon ou le marquage commun de paquets de données en amont et en aval sur le côté de la liaison de communication.

10. Dispositif de régulation de congestion de trafic (121) pour réguler une congestion de trafic sur une liaison de communication (10), le dispositif de régulation de congestion de trafic étant configuré pour recueillir des occupations de file d'attente en amont et en aval ($Q_{US}$; $Q_{DS}$) de files d'attente en amont et en aval respectives (210 ; 110) sur des côtés opposés de la liaison de communication, dans lequel des trafics en amont et en aval sont respectivement mis en file d'attente, pour déterminer une occupation de file d'attente d'agrégat ($Q_{TOT}$) pour une file d'attente virtuelle (111) agrégeant les trafics en amont et en aval mis en file d'attente en se basant sur les occupations de file d'attente en amont et en aval, pour déterminer une probabilité d'abandon ou de marquage d'agrégat ($P_{TOT}$) en se basant sur l'occupation de file d'attente d'agrégat et pour abandonner ou marquer de manière conjointe des paquets de données en amont et en aval sur un côté de la liaison de communication en se basant sur la probabilité d'abandon ou de marquage d'agrégat.

11. Unité de communication (100) comprenant un dispositif de régulation de congestion de trafic (121) selon la revendication 10 et destinée à être couplée au côté de la liaison de communication.

12. Unité de communication (100) selon la revendication 11, dans laquelle la liaison de communication est une liaison de communication de point à point, et l'unité de communication étant un multiplexeur d'accès à la ligne d'abonné numérique, DSLAM, ou une unité de point de distribution, DPU, G.fast.

13. Unité de communication selon la revendication 11, dans laquelle la liaison de communication est une liaison de communication de point à multipoint, et l'unité de communication étant un système de terminaison par modem câble, CMTS.

**14.** Unité de communication selon la revendication 11, dans laquelle la liaison de communication est une liaison de communication de point à point, et l'unité de communication étant une passerelle résidentielle de ligne d'abonné numérique, xDSL, ou une passerelle résidentielle G.fast.

**15.** Unité de communication selon la revendication 11, dans laquelle la liaison de communication est une liaison de communication de point à multipoint, et l'unité de communication étant un modem câble, CM.

Fig. 1 (Prior Art)

Fig. 2 (Prior Art)

Fig. 3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Active Queue Management based on Proportional Integral Controller Enhanced (PIE) for Data-over-Cable Service Interface Specifications (DOCSIS)Cable Modems*

- *Joint Upload -Download TCP Acceleration Over Mobile Data Networks*
- *AQM Stability in Multiple Bottleneck Networks*